(19)

Europäisches Patentamt

European Patent Office

Office européen des brevets

(11) **EP 4 586 693 A1**

(12) **EUROPEAN PATENT APPLICATION**

(43) Date of publication:
**16.07.2025 Bulletin 2025/29**

(21) Application number: **25151669.6**

(22) Date of filing: **14.01.2025**

(51) International Patent Classification (IPC):
*H04W 48/14* (2009.01)     *H04W 76/15* (2018.01)
*H04W 84/12* (2009.01)

(52) Cooperative Patent Classification (CPC):
**H04W 84/12; H04W 48/14; H04W 76/15;**
H04W 24/10; H04W 68/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.01.2024 US 202463620874 P
15.01.2024 US 202463620878 P**

(71) Applicant: **Cisco Technology, Inc.
San Jose, CA 95134 (US)**

(72) Inventors:
- **GUPTA, Binita
  San Diego, 92127 (US)**
- **HART, Brian Donald
  Sunnyvale, 94087 (US)**
- **SMITH, Malcolm Muir
  Richardson, 75082 (US)**
- **Dumdei, Alan
  Greenville, 75402 (US)**

(74) Representative: **Noble, Nicholas et al
Kilburn & Strode LLP
Lacon London
84 Theobalds Road
London WC1X 8NL (GB)**

(54) **SUBSCRIPTION BASED EVENTS UPDATES FOR NEIGHBORING APS**

(57)     A computer-implemented method is disclosed. The method includes receiving, at a serving access point (AP) from a non-AP multi-link device (MLD), a request frame that includes a request for receiving one or more updates about a plurality of APs; in response to the receiving the request frame, identifying, by the serving AP, one or more type of events associated with at least one AP of the plurality of APs for which the non-AP MLD requested the one or more updates; and sending, by the serving AP to the non-AP MLD, a response frame that indicates one of acceptance or rejection of the request for receiving the one or more updates.

**EP 4 586 693 A1**

**Description**

**CROSS-REFERENCE TO RELATED APPLICATIONS**

This application claims priority to and the benefit of U.S. Prov. App. No. 63/620,874, filed on January 14, 2024, and U.S. Prov. App. No. 63/620,878, filed on January 15, 2024, which are expressly incorporated herein by reference in their entirety.

**TECHNICAL FIELD**

The present technology relates to the field of network communication and routing technologies addressing configurations for access points (APs) in a wireless network. Specifically, the proposed technology relates to methods for the monitoring of a plurality of APs in a wireless network and notifying network appliances of the status of the APs using an event subscription model.

**BACKGROUND**

Wi-Fi technology has undergone continuous evolution and innovation since its inception, resulting in significant advancements with each new generation. Following Wi-Fi 5 (802.11ac) there has been Wi-Fi 6 (802.11ax), Wi-Fi 7 (802.11be), and soon there will be Wi-Fi 8 (802.11bn) and Wi-Fi 9, each new Wi-Fi generation brings notable improvements in speed, capacity, efficiency, and overall performance.

Wi-Fi 5 introduced substantial upgrades over its predecessor, Wi-Fi 4 (802.11n). It introduced the use of wider channel bandwidths, multi-user Multiple-Input Multiple-Output (MIMO), and beamforming technologies. These advancements significantly increased data transfer rates and improved network capacity, allowing multiple devices to simultaneously connect and communicate more efficiently. Wi-Fi 6/6E included enhanced orthogonal frequency-division multiple access (OFDMA) and target wake time (TWT) mechanisms and included greater frequency and improved overall spectral efficiency and power management and better performance in crowded areas. Wi-Fi 7 (802.11be) delivers speeds of up to 30 Gbps, utilizing multi-band operation, wider bandwidth, advanced MIMO techniques, and improved modulation schemes. Wi-Fi 7 also focuses on reducing latency and enhancing security features.

Wi-Fi 8 (802.11bn) aims to revolutionize wireless connectivity by providing ultra-high reliability enabling rich experiences for QoS demanding applications such as cloud gaming, AR/VR, industrial IoT, wireless TSN etc. Wi-Fi 8 is expected to introduce advancements like seamless roaming, multi-AP coordination for predictable QoS, enhanced power saving and advanced beamforming techniques paving the way for futuristic applications and seamless connectivity experiences.

As Wi-Fi technology continues to evolve, each new Wi-Fi generation brings improvements that address the growing demands of modern networks, including increased device density, higher data rates, lower latency, improved reliability, and better overall network performance. These advancements play a crucial role in enabling emerging technologies, supporting the proliferation of smart devices, and transforming the way we connect and communicate in an increasingly interconnected world.

**BRIEF DESCRIPTION OF THE SEVERAL VIEWS OF THE DRAWINGS**

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:

FIG. 1 illustrates a block diagram of an example wireless communication network according to some aspects of the present disclosure.

FIG. 2A illustrates a network diagram illustrating an example network environment of multi-link operation according to some aspects of the present disclosure.

FIG. 2B illustrates an illustrative schematic diagram for connectivity of an access point (AP) multi-link device (MLD) with multiple affiliated APs to a non-AP MLD with multiple affiliated non-AP stations (STAs) according to some aspects of the present disclosure.

FIG. 3 illustrates an example of a seamless mobility domain according to some aspect of the present disclosure.

FIG. 4 illustrates an example event trace diagram according to some aspects of the present disclosure.

FIG. 5 illustrates an example flow-chart of method operations according to some aspects of the present disclosure.

FIG. 6 illustrates an example of a computing system in accordance with certain embodiments.

## DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

A used herein the term "configured" shall be considered to interchangeably be used to refer to configured and configurable unless the term "configurable" is explicitly used to distinguish from "configured." The proper understanding of the term will be apparent to persons of ordinary skill in the art in the context in which the term is used.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Abbreviations -

Extremely high throughput (EHT)

Access Category and Traffic Identifier (AC/TID)

Station (STA)

Robust Security Network Element (RSNE)

Association and key management (AKM)

Pairwise Master Key (PMK)

Pairwise Transient Key (PTK)

Basic service set (BSS)

Access Point (AP)

Wireless LAN Controller (WLC)

Wi-Fi Protected Access (WPA)

MLD: Multi-Link Device

MLO: Multi-link operation

Extended Service Set (ESS)

Service Set Identifier (SSID)

Wireless Local Area Network (WLAN)

Advanced Encryption Standard (AES)

Fast Transition (FT)

As used herein, the term "configured" shall be considered to be used interchangeably with configured and configurable, unless the term "configurable" is explicitly used to distinguish from "configured." The proper understanding of the term will be apparent to persons of ordinary skill in the art in the context in which the term is used.

Various technical features may be readily apparent to one skilled in the art from the following figures, descriptions, and claims.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

Aspects of the present disclosure can be implemented in any device, system or network that is capable of transmitting and receiving radio frequency (RF) signals according to one or more of the Institute of Electrical and Electronics Engineers (IEEE) 802.11 standards, the IEEE 802.15 standards, the Bluetooth® standards as defined by the Bluetooth Special Interest Group (SIG), or the Long Term Evolution (LTE), 3G, 4G or 5G (New Radio (NR)) standards promulgated by the 3rd Generation Partnership Project (3GPP), among others. The described implementations can be implemented in any device, system or network that is capable of transmitting and receiving RF signals according to one or more of the following technologies or techniques: code division multiple access (CDMA), time division multiple access (TDMA), frequency division multiple access (FDMA), orthogonal FDMA (OFDMA), single-carrier FDMA (SC-FDMA), single-user (SU) multiple-input multiple-output (MIMO) and multi-user (MU) MIMO. The described implementations also can be implemented using other wireless communication protocols or RF signals suitable for use in one or more of a wireless personal area network (WPAN), a wireless local area network (WLAN), a wireless wide area network (WWAN), or an internet of things (IOT) network.

IEEE 802.11, commonly referred to as Wi-Fi, has been around for three decades and has become arguably one of the most popular wireless communication standards, with billions of devices supporting more than half of the worldwide wireless traffic. The increasing user demands in terms of throughput, capacity, latency, spectrum, and power efficiency calls for updates or amendments to the standard to keep up with them. As such, Wi-Fi generally has a new amendment after every few years with its own characteristic features. In the earlier generations, the focus was primarily higher data rates, but with ever increasing density of devices, area efficiency has become a major concern for Wi-Fi networks. Due to this issue, the last (802.11 be (Wi-Fi 7)) amendments focused more on efficiency though higher data rates were also included. The next expected update to IEEE 802.11 is coined as Wi-Fi 8. Wi-Fi 8 will attempt to further improve reliability and minimize latency to meet the ever-growing demand for the Internet of Things (IoT), high resolution video streaming, low-latency wireless services, wireless Time Sensitive Networking (TSN) etc.

Multiple Access Point (AP) coordination and transmission in Wi-Fi refers to the management of multiple access points in a wireless network to avoid interference and ensure efficient communication between the STA devices and the network. When multiple access points are deployed in a network - for instance in buildings and office complexes - they operate on the same radio frequency, which can cause interference and degrade the network performance. To mitigate this issue, access points can be configured to coordinate their transmissions and avoid overlapping channels.

Wi-Fi 7 introduced the concept of multi-link operation (MLO), which gives the devices (Access Points (APs) and Stations (STAs)) the capability to operate on multiple links (or even bands) at the same time. MLO introduces a new paradigm to multi-AP coordination which was not part of the earlier coordination approaches. MLO is considered in Wi-Fi-7 to improve the throughput of the network and address the latency issues by allowing devices to use multiple links.

A multi-link device (MLD) may have several "affiliated" devices, each affiliated device having a separate PHY interface, and the MLD having a single link to the Logical Link Control (LLC) layer. In IEEE 802.11be, a multi-link device (MLD) is defined as: "A device that is a logical entity and has more than one affiliated station (STA) and has a single medium access control (MAC) service access point (SAP) to logical link control (LLC), which includes one MAC data service" (see: LAN/MAN Standards Committee of the IEEE Computer Society, Amendment 8: Enhancements for extremely high throughput (EHT), IEEE P802.11 be™/D0.1 , Sep. 2020, section 3.2). Connection(s) with an MLD on the affiliated devices may occur independently or jointly. A preliminary definition and scope of a multi-link element is described in section 9.4.2.247b of aforementioned IEEE 802.11 be draft. An idea behind this information element/container is to provide a way for multi-link devices (MLDs) to share the capabilities of different links with each other and facilitate the discovery and association processes. However, this information element may still be changed, or new mechanisms may be introduced to share the MLO information (e.g., related to backhaul usage).

In multi-link operation (MI,O) both STA and APs can possess multiple links that can be simultaneously active. These links may or may not use the same bands/channels.

MLO allows sending PHY protocol data units (PPDUs) on more than one link between a STA and an AP. The links may be carried on different channels, which may be in different frequency bands. Based on the frequency band and/or channel separation and filter performance, there may be restrictions on the way the PPDUs are sent on each of the links.

MLO may include a basic transmission mode, an asynchronous transmission mode, and a synchronous transmission mode.

In a basic transmission mode, there may be multiple primary links, but a device may transmit PPDU on one link at a time. The link for transmission may be selected as follows. The device (such as an AP or a STA) may count down a random back off (RBO) on both links and select a link that wins the medium for transmission. The other link may be blocked by in-device interference. In basic transmission mode, aggregation gains may not be achieved.

In an asynchronous transmission mode, a device may count down the RBO on both links and perform PPDU transmission independently on each link. The asynchronous transmission mode may be used when the device can support simultaneous transmission and reception with bands that have sufficient frequency separation such as separation between the 2.4 GHz band and the 5 GHz band. The asynchronous transmission mode may provide both latency and aggregation gains.

In a synchronous PPDU transmission mode, the device may count down the RBO on both links. If a first link wins the medium, both links may transmit PPDUs at the same time. The transmission at the same time may minimize in-device interference and may provide both latency and aggregation gains.

Multi-AP coordination and MLO are two features directed to improve the performance of Wi-Fi networks as the Multi-AP coordination is directed toward utilizing (distributed) coordination between different APs to reduce inter-Basic Service Set (BSS) interference for improved spectrum utilization in dense deployments, and the MLO supports high data rates and low latency by leveraging flexible resource utilization offered by the use of multiple links for the same device.

<u>OVERVIEW</u>

In one aspect, a computer-implemented method includes receiving, at a serving access point (AP) from a non-AP multi-link device (MLD), a request frame that includes a request for receiving one or more updates about a plurality of APs; in response to the receiving the request frame, identifying, by the serving AP, one or more type of events associated with at least one AP of the plurality of APs for which the non-AP MLD requested one or more updates; and sending, by the serving AP to the non-AP MLD, a response frame that indicates one of acceptance or rejection of the request for receiving the one or more updates.

In another aspect, identifying the one or more type of events associated with the at least one AP of the plurality of APs further includes determining the at least one AP of the plurality of APs using at least one of a basic service set identifier (BSSID), a media access control (MAC) address, or an AP MLD identifier, of the at least one AP of the plurality of APs, wherein the at least one AP of the plurality of APs is an AP MLD, and wherein the AP MLD is a neighboring AP MLD.

In another aspect, the computer-implemented method further includes determining, by the serving AP, that the request frame identifies the plurality of APs as a wildcard; and identifying, by the serving AP, that the non-AP MLD requests the one or more type of events for all relevant basic service set identifiers (BSSIDs) of the plurality of APs.

In another aspect, all the relevant BSSIDs are in a single extended service set (ESS), a single wireless local area network (WLAN), or on a single floor.

In another aspect, the at least one AP of the plurality of APs is determined as being a first hop or a second hop neighbor of the serving AP based on the request frame.

In another aspect, identifying the one or more type of events includes identifying a list of events from an event types element corresponding to the at least one AP of the plurality of APs.

In another aspect, the list of events includes a BSS load update event, an AP add event, an AP delete event, an AP link enable event, an AP link disable event, a basic service set (BSS) parameters change count update event, and/or an access category and traffic identifier (AC/TID) update event, wherein each event in the list of events is identified by a respective bit mask that is indicative of an event specific update request or exclusion thereof.

In another aspect, a value of 1 for the respective bit mask represents the non-AP MLD requested to subscribe for receiving the update for a particular type of event of the one or more type of events, and a value of 0 for the respective bit mask represents the non-AP MLD requested to not subscribe for receiving the update for the particular type of event.

In another aspect, identifying the one or more type of events further includes identifying a threshold for a degree of change corresponding to the one or more type of events for sending update about the at least one AP of the plurality of APs to the non-AP MLD.

In another aspect, identifying the one or more type of events includes identifying whether the non-AP MLD is requesting one time update about the one or more type of events, regular event updates about the one or more type of events, or regular event updates about the one or more type of events when a threshold condition is met.

In another aspect, the threshold condition corresponds with an uplink received signal strength indicator (RSSI) value measured by the serving AP that is below a predetermined value.

In another aspect, the predetermined value is less than -60 dBm or -65 dBm.

In another aspect, the request frame or the response frame is received or sent, respectively, as a protected management frame.

In another aspect, the request frame is a neighbor report request frame and the response frame is a neighbor report response frame, or the request frame is a neighbor AP events query request frame and the response frame is a neighbor AP events query response frame.

In another aspect, the computer-implemented method further includes advertising, by the serving AP, a capability of the serving AP to provide subscription-based events updates notification for a plurality of neighboring APs or AP MLDs.

In another aspect, the capability is advertised in a beacon or a probe response frame using a subfield in a basic multi-link element or a neighbor AP events updates notification support element.

In another aspect, the computer-implemented method further includes generating, by the serving AP, a notification frame; and sending, by the serving AP to the non-AP MLD, the notification frame, wherein the notification frame includes one or more event update notification elements, and each of the one or more event update notification elements corresponds to an AP or AP MLD of the plurality of APs.

In another aspect, an event update notification element of the one or more event update notification elements includes a basic service set identifier (BSSID) or a media access control (MAC) address of a respective AP or AP MLD of the plurality of APs.

In another aspect, an event update notification element of the one or more event update notification elements includes a plurality of events corresponding to the AP or AP MLD of the plurality of APs, wherein each event of the plurality of events is identified by a respective bit mask.

In another aspect, the plurality of events includes a BSS load update event, an AP add event, an AP delete event, an AP link enable event, an AP link disable event, a basic service set (BSS) parameters change count update event, and/or an access category and traffic identifier (AC/TID) update event, wherein each event of the plurality of events is identified by a respective bit mask.

In another aspect, the computer-implemented method further includes receiving or collecting, by the serving AP, event updates for the AP or AP MLD of the plurality of neighboring APs or AP MLDs for each event of the plurality of events identified by the respective bit mask.

In another aspect, one or more event updates are collected by the serving AP using one of a centralized subscription model from a centralized controller or a distributed subscription model from each of the plurality of APs.

In another aspect, the centralized controller maintains a database of event updates for the plurality of APs in order to provide the one or more event updates to the non-AP MLD according to the centralized subscription model.

In another aspect, under the distributed subscription model, the serving AP separately receives respective event updates from one or more of the plurality of APs, in order to provide the one or more event updates to the non-AP MLD.

In another aspect, each AP of the plurality of APs maintains events subscription information to provide the event updates to the serving AP.

In another aspect, one or more event updates are received or collected, by the serving AP, over a distribution system (DS), or over-the-air using multi-AP coordination messaging.

In another aspect, sending the notification frame includes sending a neighbor AP events notification frame upon determining that a signal strength indicator (RSSI) of non-AP MLD meets a particular criterion.

In another aspect, the particular criterion is the RSSI is not greater than a negotiated RSSI threshold value.

In another aspect, the computer-implemented method further includes broadcasting, by the serving AP, the notification frame.

In another aspect, the notification frame is sent as a protected management frame.

In one aspect, an access point (AP) includes at least one memory configured to store machine-executable instructions and at least one processor communicatively coupled with the at least one memory. The at least one processor is configured to execute the machine-executable instructions to: receive, from a non-AP multi-link device (MLD), a request frame that includes a request for receiving one or more updates about a plurality of APs; in response to the request frame, identify one or more type of events associated with at least one AP of the plurality of APs for which the non-AP MLD requested one or more updates; and send, to the non-AP MLD, a response frame that indicates one of acceptance or rejection of the request for receiving the one or more updates.

In one aspect, a non-transitory computer-readable media includes computer-readable instructions stored thereon, which, when executed by at least one processor of an access point (AP), cause the AP to: receive, from a non-AP multi-link device (MLD), a request frame that includes a request for receiving one or more updates about a plurality of APs; in response to the request frame, identify one or more type of events associated with at least one AP of the plurality of APs for which the non-AP MLD requested one or more updates; and send, to the non-AP MLD, a response frame that indicates one of acceptance or rejection of the request for receiving the one or more updates.

In one aspect, a computer-implemented method performed by a serving access point multi=link device (AP MLD) includes: identifying a plurality of neighboring AP MLDs in a network that are suitable for roaming by a client device or non-AP MLD served by the AP MLD; receiving, at the AP MLD from the client device or non-AP MLD, an unsolicited message indicating an intention of the client device or non-AP MLD to transmit or be triggered at a specified upcoming auxiliary (aux) radio dwell; triggering one or more roamable client devices or non-AP MLDs including the client device or non-AP MLD in the network to contend for transmission during the specified aux radio dwell; collecting received signal strength indicators (RSSIs) from each of the plurality of neighboring AP MLDs during the aux dwell; processing the collected RSSIs to identify one or more target AP MLDs among the plurality of neighboring AP MLDs based on the received RSSIs; and transmitting, to the client device or non-AP MLD, the one or more target AP MLDs identified based upon the RSSIs that are associated with the client device or non-AP MLD.

In another aspect, the computer-implemented method further includes transmitting, to the client device or non-AP MLD, a schedule for when the auxiliary (aux) radio of the one or more target AP MLDs among the plurality of neighboring AP MLDS dwell on a channel of the AP MLD.

In another aspect, the schedule is periodic or pseudo-random, and wherein the auxiliary (aux) radio of the one or more target AP MLDs is on the channel of the AP MLD for a respective predetermined number of milliseconds of a second.

In another aspect, the computer-implemented method further includes transmitting, to the client device or non-AP MLD, a message to indicate a time to stay awake for the client device or non-AP MLD.

In another aspect, the computer-implemented method further includes triggering the client device or non-AP MLD to transmit during the one or more target AP MLDs among the plurality of neighboring AP MLDS dwelling on a channel of the AP MLD.

In another aspect, the computer-implemented method further includes transmitting, to the client device or non-AP MLD, the RSSIs that are associated with the client device or non-AP MLD via a management frame,

In another aspect, the management frame is an Orthogonal Frequency-Division Multiple Access (OFDMA) transmission of a unicast frame.

In another aspect, the computer-implemented method further includes receiving, from the plurality of neighboring AP MLDs, a channel and a schedule of the channel; and transmitting, to the client device or non-AP MLD, the channel and the schedule of the channel.

In another aspect, the channel and the schedule of the channel are transmitted using a management frame, a beacon, or a probe response.

In another aspect, the management frame is neighbor report frame or a unicast management frame.

In another aspect, the computer-implemented method includes receiving, from the client device or non-AP MLD, a management frame or a neighbor report request frame including a request for filtering in accordance with one or more service set identifies (SSIDs), one or more basic SSIDs (BSSIDs), or one or more AP MLD media access control (MAC) addresses; and transmitting, to the client device or non-AP MLD, another management frame or a neighbor report response frame including a response according to the request for filtering.

In another aspect, the management frame is a basic service set transition management (BTM) query frame.

In another aspect, the neighbor AP events notification frame is sent as a protected management frame.

EXAMPLE EMBODIMENTS

Roaming enhancements in Ultra High Reliability Study Group (UHR SG) and 802.11bn (Wi-Fi 8) support more reliable and seamless roaming. Roaming requires a client device (or non-access point (AP) device) to select an appropriate roaming target AP or AP multi-link device (MLD). The client device generally performs off-channel scanning for candidate roaming APs (or AP MLDs) by listening to beacons, or by sending Probe Request and receiving Probe Responses. Since the Basic Service Set (BSS) Load and other BSS parameters dynamically change for the neighboring APs (or AP MLDs), the client device may not have the most recent or up-to-date BSS information for the neighboring APs even after it has performed scan for the neighboring APS, since BSS Load and other information may have changed since the last scan by the client device. By way of an example, BSS Load may be low when the client device scanned a neighboring AP (or AP MLD) but it may change to high BSS Load when the client device actually determines to select the neighboring AP (or AP MLD) as a target roaming AP and roams to the selected neighboring AP. By way of an example, scanning time may be a few seconds or 10s of seconds. Additionally, scanning is a disruptive operation, and generally not performed while serving real-time traffic.

Accordingly, it is desirable for a client device to get notified of latest updates to BSS parameters for suitable roaming candidate neighboring APs without requiring the client device to continuously perform scanning for those neighboring APs. This enables the client device to select the most desired roaming target AP taking into consideration the latest BSS Load and other BSS parameters of the neighboring APs, and, thereby, improving overall roaming outcome or performance. In some examples, a mechanism is disclosed for the client device to receive regular events updates notifications for one or more neighboring APs through a current serving AP of the client device using an event subscription model.

In some examples, a mechanism for a client device to receive regular (or timely) event updates notifications for one or more neighboring APs (or AP MLDs) through a current serving AP (or AP MLD) is based upon an event subscription model. In particular, new request and response frames are proposed. The request frame may be a neighbor AP events query request frame, and the response frame may be a neighbor AP events query response frame. The request frame may be sent by the client device to the current serving AP (or AP MLD) of the client device for querying for events updates. The events updates are associated with, or corresponding to, one or more neighboring APs (or AP MLDs). Additionally, the request frame may be used by the client device to query for one-time events update, or periodic updates from one or more neighbor APs (or AP MLDs). Additionally, or alternatively, the request frame may be used by the client to query for receiving threshold-based notifications for events updates from one or more neighbor APs (or AP MLDs).

In some examples, a current serving AP (or AP MLD) advertises its capability of providing subscription-based events updates notification for one or more neighboring APs (or AP MLDs) in a Beacon frame or a Probe Response frame. The serving AP may also advertise an Events bitmask (discussed in detail below) in the Beacon or Probe Response frame indicating for which events the serving AP can provide events updates notification. By way of an example, this event updates notification capability and Events bitmask may be advertised using subfields in a Basic Multi-Link element and/or a separate element such as a Neighbor AP Events Updates Notification Support element indicating Events bitmask for supported events for which the serving AP can provide events updates notification for one or more neighboring APs (or AP MLDs). The subfields in the Basic Multi-Link element may be a new subfield in the Common Info field of the Basic Multi-Link element or existing MLD capabilities related subfield in the Basic Multi-Link element.

In some examples, the request frame (or the neighbor AP events query request frame) includes an element indicating a list of one or more neighbor APs (or AP MLDs) for which one or more event updates are requested by the client device. Each of the one or more neighbor APs (or AP MLDs) is identified by its respective BSSID, AP MLD MC address, AP MLD Identifier (ID), and/or an identifier. Accordingly, a message (or the request frame) may include a list of BSSIDs and a list of APs (or AP MLDs) for which the client device is requesting event updates. Alternatively, a wildcard (*) may be used to indicate that the client device is requesting event updates for all relevant BSSIDs belonging to the same ESS, WLAN, and/or floor, etc.

By way of an example, the request frame may identify the one or more neighbor APs (or AP MLDs) for which events updates are subscribed using a format described below.

## Format 1: Element ID + Length + Element ID Extension + N*BSSID

Format 2: Element ID + Length + Element ID Extension + N*(AP MLD MAC Address or AP MLD ID or an identifier)

In some examples, format 1 and format 2 both may be included in the request frame. Further, in format 1 and format 2 above, N represents a number of neighboring APs (or AP MLDs).

In some examples, a client device may generate and transmit a generic request for receiving event updates notifications from one or more neighboring APs (or AP MLDs). The client device may indicate in the generic request whether the client device requests event updates notification about 1-hop or 2-hop (or a first tier or a second tier) neighboring APs (or AP MLDs). Additionally, or alternatively, the client device may not indicate a particular neighboring AP (or AP MLD) in the generic request for receiving event updates, and the serving AP (or AP MLD) may identify one or more neighboring APs (or AP MLDs) for which event updates are provided to the client device.

In some examples, the client device may suggest one or more events for which the client device requests one or more updates about one or more neighboring APs (or AP MLDs) in an element, for example, an Event Types element. The one or more events may include, but not limited to, a BSS load update, a latency, jitter, throughput per AC/TID update event (for example, an update event including a specific point of cumulative distribution function (CDF) such as 99%), an AP (or AP MLD) add event, an AP (or AP MLD) delete event, an AP (AP MLD) link enable event, an AP (or AP MLD) link disable event, a BSS parameters change count (BPCC) update event, etc. Each event of the one or more event is represented by its respective bit value. Accordingly, a list of the one or more events may be represented using a bit mask field such as, an events bitmask, where each bit of the events bitmask represents or corresponds to an event of the one or more events described herein. By way of an example, the events bitmask may be 1 octet long, 2 octets long, 3 octets long, or 4 octets long. A bit value of 1 may indicate that the client device has requested events updates about an event associated with that particular bit, and a bit value of 0 may indicate that the client device has not requested events updates about an event associated with that particular bit, or vice versa.

Additionally, or alternatively, in some examples, the client device may also indicate a threshold value for a degree of change for one or more specific events at which the client device is requesting an event update notification for those one or more specific events. For example, the client device may indicate that BSS Load notification should be sent when BSS Load changes by +/- 10%. The threshold value for the degree of change may be indicated by the client device to the service AP (or AP MLD) by adding additional Events threshold fields in the Event Types element, for example, using a format Element ID + Length + Element ID Extension + Events bitmask + Events threshold. The Events threshold may be an optional field, and hence may be skipped.

In some examples, the client device may request different event updates from different neighboring APs (or AP MLDs). Accordingly, more than one Event Types subelements may be included in a request frame generated by the client device, and each Event Types subelement corresponds with event updates requested by the client device from each of the one or more neighboring APs (or AP MLDs) and format 1 and format 2, described herein, may be updated to further identify the list of one or more events types corresponding to each of the one or more neighboring APs (or AP MLDs) as shown below.

Format 1: Element ID + Length + Element ID Extension + N*BSSID + Event Types

Format 2: Element ID + Length + Element ID Extension + N*(AP MLD MAC Address or AP MLD ID or an identifier + Event Types)

In some examples, the request frame generated by the client device may also include an identification suggesting periodicity and/or criteria of the event updates. For example, a Type 0 may suggest that the client device is requesting a single or one-time events updates, a Type 1 may suggest that the client device is requesting subscription to receive regular events updates notifications, and/or a Type 2 may suggest that the client device is requesting subscription to receive regular events updates notifications when a certain RSSI threshold condition is met such as, when an uplink RSSI value as measured by the serving AP (or AP MLD) at the client device is less than, or equal to, -60 dBm or -65 dBm.

When the request frame indicates the identification suggesting periodicity and/or criteria based upon RSSI threshold value, event updates are transmitted or sent by the serving AP (or AP MLD) when the client device's uplink RSSI goes below a certain threshold value and may cause the client device to roam to a different target AP (or AP MLD). When the client device has a good RSSI, the client device is not looking to roam to another target AP (or AP MLD). Accordingly, event updates are not needed to be sent or transmitted to the client device. Accordingly, Type 2 RSSI threshold-based subscription minimizes the network overhead caused by regularly, or more frequently, sending such events updates notifications and ensures that event updates are sent only when such events updates are useful for the client device for making a roaming decision. The RSSI Threshold value may be specified by the client device and serving AP (or AP MLD) accepts that value and provides events update notifications only when uplink RSSI at the client device is less than, or equal to, the specified RSSI Threshold value. Alternatively, the RSSI Threshold value may be a fixed value as agreed upon by the client device and the serving AP (AP MLD) vendors.

In some examples, the serving AP (or AP MLD) sends a response frame, such as a Neighbor AP Events Query Response frame, to the client device confirming acceptance of the received query request from the client device, or rejection of the received query request frame. When the serving AP (or AP MLD) rejects the received query request frame, the service AP (or AP MLD) may make a counter proposal for an RSSI threshold or other events related thresholds (e.g., BSS Load Threshold) to the client device. The client device then sends another query request to the serving AP (or AP MLD) with the serving AP suggested threshold parameters for the query.

In some examples, the request frame and response frame may be a Neighbor AP Events Query Request and a Neighbor AP Events Query Response frames, respectively, that are sent as protected management frames between the client device and the serving AP (or AP MLD). Additionally, or alternatively, the request frame and response frame may be a Neighbor Report Request frame and a Neighbor Report Response frame, as defined in 802.11, which are extended to provide functionality, as described herein, with reference to the Neighbor AP Events Query Request and Response frames.

In some examples, a notification frame such as, a neighbor AP Events Notification frame may be generated to include at least one Event Update Notification element and sent to the client device, as requested by the client device, and/or agreed by the client device and the serving AP (or AP MLD). The notification frame is sent by the serving AP (or AP MLD) to the client device to provide events updates notifications from one or more neighboring APs (or AP MLDs) to the client device. The notification frame is based upon aggregation of events updates for multiple events in the same frame across multiple neighboring APs (or AP MLDs). By way of an example, the notification frame includes one or more Event Update Notification element, where each Event Update Notification element corresponds with one neighboring AP (or AP MLD).

By way of an example, an Event Update Notification element may include a BSS ID, an AP MLD MAC address, an AP MLD ID, and/or an identifier for identifying a neighboring AP (or AP MLD). Additionally, or alternatively, the Event Update Notification element may also provide an update specific to an AP (or AP MLD), for example, an AP Add event, and/or an AP Delete event, a link add event, a link delete event, etc. As described herein, an events bitmask may be included in the notification frame for indicating a list of events for which updates are provided. Each event for which an update is being provided may have its respective bit value set to '1' in the events bitmask.

Alternatively, or additionally, a separate subelement or field may be included in the notification frame for which an update is being provided. For example, for a BSS Load update event, a BSS Load subelement may be included to provide latest BSS Load update; for an AP Delete event, a Reconfiguration Multi-Link element may be included as a subelement to indicate the latest AP Delete event update; for an AP Add event, a Basic Multi-Link element may be included as a subelement to indicate the latest set of affiliated APs (or the AP MLDs); for an expected latency per AC/TID update event, a subelement providing an expected latency per AC/TID may be included; and for a BPCC update event, the latest BPCC information may be included for the BSSID.

In some examples, the notification frame, such as the neighbor AP Events Notification frame, may include one or more of the Event Update Notification elements to provide event updates for one or more neighboring APs (or AP MLDs). The current AP (or AP MLD), also referenced herein as a serving AP (or AP MLD), may receive event updates, or collect event updates, from one or more neighboring APs (or AP MLDs), using a centralized subscription model or a distributed subscription model, as described herein, to send to the client device.

In the centralized subscription model, one or more neighboring APs (or AP MLDs) provide regular event updates to a centralized controller (WLC) whenever an event occurs, or an event update occurs. The event update may be provided based upon satisfying a certain threshold condition; for example, a BSS Load update may be provided when the BSS load changes by +/-10%. A serving AP to the client device subscribes for receiving events updates for desired events with the centralized controller for receiving updates related to one or more neighboring APs/AP MLDs, upon receiving the request frame such as, the Neighbor AP Events Query request frame, from the client device. The centralized controller maintains events subscription information describing which serving APs are interested in receiving which events updates from which neighboring APs or AP MLDs. The centralized controller then forwards applicable events updates to the serving APs when it receives those events updates from the neighboring APs.

In the distributed subscription model, the current serving AP (or AP MLD) subscribes for events with one or more neighboring APs (or AP MLDs) directly, upon receiving the request frame such as, the Neighbor AP Events Query request frame, from the client device. Each neighboring AP (or AP MLD) maintains subscription information describing which other APs are interested in which specific event updates from that AP. The neighboring AP then forwards events updates to subscribed APs when those events updates happen.

In some examples, in the distributed subscription model, a neighboring AP may provide events updates to other subscribed APs over-the-DS. Alternatively, the neighboring AP may provide events updates to the subscribed APs over-the-air using multi-AP coordination messaging.

In the distributed subscription model and the centralized subscription model, the current serving AP (or AP MLD) maintains the client device specific subscription for events updates such as, which client device is interested in which events updates from which neighboring APs (or AP MLDs). Accordingly, the centralized controller or neighboring APs do not need to maintain client device specific subscription information, which makes the approach proposed herein a more scalable subscription approach.

In some examples, however, the client device specific subscription for events updates may be maintained at the centralized controller, or at the neighboring APs or AP MLDs. Also, for the Type 2 RSSI threshold-based subscription, as described herein, the serving AP may also determine when to send event updates to the client device based upon client device's RSSI. If client device's RSSI is greater than the negotiated RSSI Threshold with the client device, then the serving AP is not required to send any events updates to the client device.

According, as described herein, in some examples, the current serving AP (or AP MLD) sends the notification frame such as, the Neighbor AP Events Notification frame, to applicable client devices to provide relevant events updates. When the serving AP receives events updates from one or more neighboring APs (or AP MLDs), either directly or via the centralized controller, the current serving AP (or AP MLD) determines which client devices have subscribed for those events updates from the one or more neighboring APs (or AP MLDs) and sends the received events updates to the client devices, which subscribed to receive those events updates. As described herein, for Type 2 subscription events, the current serving AP (or AP MLD) sends the events updates when the RSSI threshold condition as negotiated between the client device and the current serving AP (or AP MLD) is met.

In some examples, the notification frame may be broadcasted by the serving AP (or AP MLD) instead of sending to interested client devices. As a result of broadcasting of the notification frame by the serving AP (or AP MLD), all interested client devices that are ready to roam can make use of the latest neighboring APs (or AP MLDs) information for their roaming target AP selection. Additionally, or alternatively, the Neighbor Report Response frames, as currently defined in 802.11, may be extended to provide functionality, as described herein, with reference to the notification frame such as, the Neighbor AP Events Notification frame. Further, the notification frame may be sent as a protected management frame by the serving AP to the client device.

While the notification frame, such as the neighbor AP Events Notification frame, may assist the client device to make a decision about roaming to another AP (or AP MLD), in some examples, the client device may also prefer to know whether the new AP (or AP MLD), where the client device intends to roam to, is at least as good as the current serving AP (AP MLD). This is because, some things are easier to set up and can be arranged "blindly" beforehand (e.g., BA/SCS/TWT agreements) while requiring further efforts for certain other things.

Accordingly, a client device may proactively communicate with one or more neighboring APs through a serving AP using unsolicited messages to retrieve RSSIs from one or more neighboring APs. Accordingly, real-time RSSI information may be collected or gathered by the client device from one or more nearby (neighboring) APs, and, thereby, allowing the client device to identify potential target neighboring APs even before the actual roaming event occurs.

By utilizing the serving AP as an intermediary, the client device may streamline the process of obtaining RSSI data without the need for continuous off-channel scanning. Such a proactive approach enables the client device to make informed decisions regarding potential roaming targets based on the latest RSSI information from neighboring APs. Additionally, the efficiency of roaming decisions and the overall quality of service may be improved while contributing to a seamless and uninterrupted network experience for users.

In some examples, a current serving AP in a network may be configured to facilitate seamless roaming for a client device by (i) identifying a plurality of neighboring APs in the network that are suitable for roaming for the client device served by the current serving AP; (ii) receiving an unsolicited message, from the client device, indicating the client device's intention to transmit or be triggered at a specified upcoming auxiliary (aux) radio dwell; (iii) triggering one or more roamable client devices in the network to contend for transmission during the specified aux radio dwell; (iv) collecting RSSIs from each of the transmitting neighboring APs during the aux dwell; (v) processing the collected RSSIs to identify one or more target APs among a group of transmitting neighboring APs based on the received RSSIs; and (vi) transmitting the one or more target APs identified and the associated RSSIs to the client device.

As described herein, successful roaming hinges on the client's ability to judiciously select an appropriate roaming target AP (or AP MLD). In order to identify candidate roaming APs, the client device is required to undertake an off-channel scan, either by listening to beacons or by initiating probe requests and subsequently receiving probe responses.

During seamless roaming in a network environment, the process of roaming necessitates client devices to identify potential target APs (or AP MLDs) in order to select an optimal roaming target AP (or AP MLD). To accomplish this, the client device typically engages in an off-channel scan for roaming target APs, which involves actively listening to beacons transmitted by neighboring APs or initiating the transmission of Probe Request messages and subsequently receiving Probe Responses from potential roaming target APs.

However, the act of performing an off-channel scan has implications for ongoing transmissions between the client device and its current serving AP, especially in the case of single-radio clients. In a single-radio configuration, the client utilizes a single radio interface for both scanning and maintaining connectivity with the current serving AP. As a result, engaging in off-channel scans interrupts the ongoing data transmissions between the client device and the current serving AP. This interruption has the potential to impact the quality of service (QoS) for applications that demand low latency. Applications sensitive to latency, such as real-time communication or video streaming, may experience disruptions or degraded performance during the scanning process. The temporary disconnection or disruption in ongoing transmissions may also result in a suboptimal user experience, particularly in scenarios where there is a need for seamless and uninterrupted connectivity.

Hence, the requirement for off-channel scanning during roaming presents challenges concerning the potential interruption of ongoing transmissions, especially for single-radio client devices. Striking a balance between achieving seamless roaming and upholding QoS for low-latency applications emerges as a crucial consideration when identifying a roaming target AP. This aims to ensure a seamless roaming experience while minimizing the frequency of off-channel scanning required to determine the optimal roaming target.

In order to overcome these difficulties, in some examples, methods are described for tunneling query requests, and/or encompassing probe requests and requests for beacon information for neighboring APs through a serving AP. Methods proposed herein empower a client device to solicit information about neighboring APs via the current serving AP, and, thereby reducing the necessity for extensive off-channel scanning during the roaming process.

In some examples, the serving AP communicates the presence of neighboring APs equipped with auxiliary radios, along with a predetermined schedule dictating when these auxiliary radios may be active on the serving AP's channel. This schedule can follow a periodic pattern or a pseudo-random sequence, designed to facilitate client devices with consistent in-device coexistence flows. In the optimal configuration, the auxiliary radios of the majority of neighboring APs synchronize with the serving AP's channel, being active for a few milliseconds during each second.

In instances where a serving AP foresees potential benefits for a client device in terms of roaming, the serving AP proactively transmits an unsolicited message to the client device, indicating that the client device should be active during a specified upcoming auxiliary radio dwell period. Alternatively, or additionally, if the client device wishes to assess the suitability of neighboring APs for roaming and identify potential candidate APs, the client device may send an unsolicited message to the serving AP, indicating the client device's intention to transmit or be triggered during a specified upcoming auxiliary radio dwell.

In each auxiliary dwell period, the serving AP initiates transmissions for roamable client devices, and client devices interested in roaming contend to transmit during the dwell. Typically, these transmissions are single-user (SU) or Orthogonal Frequency Division Multiple Access (OFDMA) transmissions with a width of at least 20 MHz. The transmission incorporates a Timing Advertisement (TA), such as Request-to-Self (RTS) with 0-millisecond duration, Quality of Service (QoS) Null, Block Acknowledgment (BA), other data, etc. Further, the transmission is sent by the serving AP at a very low Modulation and Coding Scheme (MCS).

The auxiliary radios gather RSSIs tagged with Timing Advertisement (TA) and relay them to the serving AP. Subsequently, the serving AP transmits this data to each client device using management frames such as, OFDMA transmission of unicast frames, to allow the client device to learn or obtain its RSSIs with regards to one or more neighboring APs.

In some examples, as part of neighbor discovery, all the scan radios (e.g., aux radios) may periodically and/or regularly loiter (e.g., all the time) on a defined "social" channel. This defined "social" channel and its schedule may be advertised by their collocated serving APs. As part of neighbor discovery during the seamless roaming discovery process (before and after roaming preparation), a serving-channel and/or
the social-channel's channel number and schedule may be provided to client devices, via a unicast management frame, a beacon, and/or a probe response.

Client devices seeking to roam or switch to that channel may transmit a frame, for example, the RTS frame, as described herein. The scan radios share the results with each client device's serving AP which then forwards it to the client device via a Neighbor Report frame as described herein.

In some examples, client devices may express a desire for specific elements obtained from scanning one or more beacons, encompassing both static and dynamic information. This often occurs when the client device engages in a low-power scan where processing stops after receiving the first MAC header in a PPDU without waiting for the payload or the Frame Check Sequence (FCS).

In some examples, a neighbor report request frame may be modified for providing the client device with the capability to include specific requests for filtering and information retrieval. The client device may request filtering based on SSID(s) using either the existing allowed SSID element or the SSID List element, with the latter applicable when multiple SSIDs are of interest. Additionally, the client device may express interest in all SSIDs by omitting both the SSID request and SSID element.

In some examples, the client device may request filtering for access points (APs) based on an BSSID and/or an AP MLD MAC address using newly defined elements with different configurations, as described below:

Configuration 1: Element ID + Length + Element ID Extension + N*BSSID

Configuration 2: Element ID + Length + Element ID Extension + N*AP MLD MAC address Configuration 3: Element ID + Length + Element ID Extension + N*(BSSID or AP MLD MAC address) Configuration 4: Element ID + Length + Element ID Extension + N1 + N1 * BSSID + N2 + N2 * AP MLD MAC address

In some examples, an absence of these filtering requests may imply that all BSSIDs and AP MLDs are of interest for the client device. Additionally, by specifying a list of BSSIDs and/or AP MLDs, diverse filtering scenarios may be provided. The intersection, union, or union/intersection can be signaled based on additional fields in different embodiments. For example, when only AP MLDs are listed, the BSSIDs may take any value. In cases where both AP MLDs and BSSIDs are listed, signaling is performed to indicate the intersection, union, or union/intersection, which ensures flexibility in specifying the relationship between the listed AP MLDs and BSSIDs, accommodating different scenarios based on the client device's preferences and requirements.

In some examples, the neighbor report request frame may be enhanced to encompass the inclusion of a Request element. The Request element specifies the traditional elements of interest. Additionally, a new element, for example, an Extended Request element, may be included mirroring the structure of the Request element but with a distinct identifier. This unique identifier designates a request for elements with Element ID = 255, accompanied by the specified Element ID Extensions. The format may include Element ID, Length, Element ID Extension (indicating a request for elements with Element ID = 255 and the listed Element ID Extensions), and N * Element ID Extension. The Extended Request element offers an advanced and versatile mechanism for client devices to articulate specific requests within the framework of the neighbor report request.

Upon receipt of any of the elements, as described herein, the serving AP undertakes processing by leveraging its knowledge of the beacon contents from one or more neighboring APs, denoted as the Neighbor AP database (NAD). Subsequently, the AP meticulously filters its NAD based on the specified SSIDs, BSSIDs, and/or AP MLDs of interest. The serving AP seamlessly incorporates the requested elements, encompassing both traditional and those associated with element ID extension fields, into the Neighbor Report elements that the serving AP transmits, for example, to the client device. While adhering to predefined policies, such as hints or recommendations, the serving AP may exercise discretion to discard or include additional SSIDs, BSSIDs, AP MLDs, and elements. For example, APs not co-located on the same floor as the client device may be subject to specific filtering criteria.

In some examples, analogous semantics may be incorporated into the BSS Transition Management (BTM) Query frame by introducing provisions for SSID, SSID List, and request elements, as well as newly defined elements such as BSSID List, AP MLD List, BSSID/AP MLD List, and Extended Request elements.

Additionally, or alternatively, in another example, comparable semantics may be integrated into any frame that shares similarities with the Neighbor Report Request frame and/or BTM Query frame. This approach ensures a consistent and standardized expression of the specified semantics across various frames within the network environment.

Following the reception of a detailed request frame from a client device, the AP, upon detecting any alterations in the requested information, is capable of autonomously dispatching an unsolicited Neighbor Report to the client device. The unsolicited Neighbor Report adheres to the identical filtering criteria and encompasses the same requested elements as specified in the initial request from the client device.

Alternatively, the AP may transmit the request to its host, controller, or a cloud-based infrastructure, where an adaptive learning process is implemented to discern prevalent patterns of client device requests. In instances where specific elements are consistently sought by some or many client devices, the AP may proactively incorporate these elements as subelements in forthcoming Neighbor Report elements, even if not explicitly specified in the client device's request. Such proactive approach enhances efficiency by pre-emptively including frequently requested elements in subsequent reports.

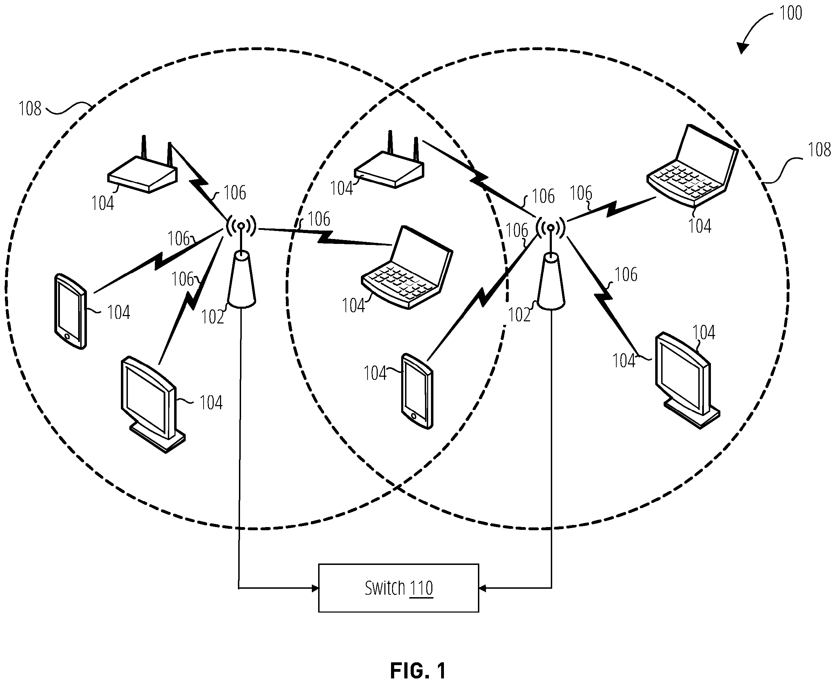

FIG. 1 illustrates a block diagram of an example wireless communication network according to some aspects of the present disclosure. According to some aspects, the wireless communication network 100 may be an example of a wireless local area network (WLAN) such as a Wi-Fi network. For example, the wireless communication network 100 may be a network implementing at least one of the IEEE 802.11 family of wireless communication protocol standards and amendments thereof (such as that defined by the IEEE 802.11-2016 specification or amendments thereof including, but not limited to, 802.11ay, 802.11ax, 802.11az, 802.11ba and 802.11be). Additionally, the wireless communication network 100 may implement future versions and amendments of the wireless communication protocol standards and amendments thereof such as 802.11bn and be modified according to the present disclosure to include the features contained herein.

Wireless communication network 100 may include numerous wireless communication devices such as an AP actor, which can be one or more of a non-MLD AP, an AP affiliated with an AP MLD, and/or an AP MLD. In the examples presented herein, the AP actor can exclude an upper UMAC. Therefore, the AP actor can include the lower UMAC, LMAC, and/or PHY. Additionally, the WLAN can include one or more of STA actors 104, which can be one or more of a non-MLD STA, a STA affiliated with a non-AP MLD, and/or a non-AP MLD. As illustrated, wireless communication network 100 also may include multiple AP actors such as AP actors 102 (may also be referred to as simply AP). AP actors 102 can be coupled to one another through a switch 110. While AP actors 102 are shown as being coupled to one another through switch 110, wireless communication network 100 can provide another device that allows the coupling of multiple AP actors.

Each of the STA actors 104 also may be referred to as a mobile station (MS), a mobile device, a mobile handset, a wireless handset, an access terminal (AT), a user equipment (UE), a subscriber station (SS), client, or a subscriber unit, among other examples. The STA actors 104 may represent various devices such as mobile phones, personal digital assistant (PDAs), other handheld devices, netbooks, notebook computers, tablet computers, laptops, display devices (for example, TVs, computer monitors, navigation systems, among others), music or other audio or stereo devices, remote control devices ("remotes"), printers, kitchen or other household appliances, key fobs (for example, for passive keyless entry and start (PKES) systems), among other examples. In other examples, the STA actors 104 can be referred to as clients and/or client devices.

Any one of AP actors 102 and an associated set of STA actors (e.g., STA actors 104) may be referred to as a basic service set (BSS), which is managed by a respective AP actor of AP actors 102. FIG. 1 additionally shows an example coverage area 108 of the each of AP actors 102, which may represent a basic service area (BSA) of wireless communication network 100. As illustrated, three of STA actors 104 are within the BSA of each of AP actors 102. The BSS may be identified to users by a service set identifier (SSID), where the BSS might be one of many in the SSID. The BSS may be identified to other devices by a unique (or substantially unique) basic service set identifier (BSSID). One or more of AP actors 102 periodically broadcasts beacon frames ("beacons") including the BSSID to enable STA actors 104 within wireless range of AP actors 102 to "associate" or re-associate with AP actors 102 to establish a respective communication link of communication links 106 (hereinafter also referred to as a "Wi-Fi link"), or to maintain communication links 106, with AP actors 102. For example, the beacons may include an identification of a primary channel used by respective AP actor of AP actors 102 as well as a timing synchronization function for establishing or maintaining timing synchronization with AP actors 102. AP actors 102 may provide communication links 106 to STA actors 104 and therefore access to external networks. While the example has been described in regard to AP actors 102 and STA actors 104, the present disclosure extends such that an AP actor may provide access to external networks to various STA actors in a WLAN via communication links 106.

To establish communication links 106 with any one of AP actors 102, each of STA actors 104 is configured to perform passive or active scanning operations ("scans") on frequency channels in one or more frequency bands (for example, the 2.4 GHz, 5 GHz, 6 GHz, or 60 GHz bands). To perform passive scanning, STA actors 104 listen for beacons, which are transmitted by a respective AP actor of AP actors 102 at or near a periodic time referred to as the target beacon transmission time (TBTT) (measured in time units (TUs) where one TU may be equal to 1024 microseconds ($\mu$s)). To perform active scanning, STA actors 104 generate and sequentially transmits probe requests on each channel to be scanned and listens for probe responses from AP actors 102. STA actors 104 may be configured to identify or select an AP and thence a selected AP actor of AP actors 102 with which to associate based on the scanning information obtained through the passive or active scans, and to perform authentication and association operations to establish the communication links 106 with the selected AP actor of AP actors 102. The selected AP actor of AP actors 102 assigns an association identifier (AID) to STA actors 104 at the culmination of the association operations, which selected AP actor of AP actors 102 uses to improve the efficiency of certain signaling to the STA actors 104.

The present disclosure modified the WLAN radio and baseband protocols for the PHY and medium access controller (MAC) layers. AP actors 102 and STA actors 104 transmit and receive wireless communications (hereinafter also referred to as "Wi-Fi communications") to and from one another in the form of PHY protocol data units (PPDUs). AP actors 102 and STA actors 104 also may be configured to communicate over other frequency bands such as shared licensed frequency bands, where multiple operators may have a license to operate in the same or overlapping frequency band or bands.

Each PPDU is a composite structure that includes a PHY preamble and a payload in the form of one or more PHY service data unit (PSDU). The information provided in the preamble may be used by a receiving device to decode the subsequent data in an intended PSDU. In instances in which PPDUs are transmitted over a bonded channel, selected preamble fields may be duplicated and transmitted in each of the multiple component channels.

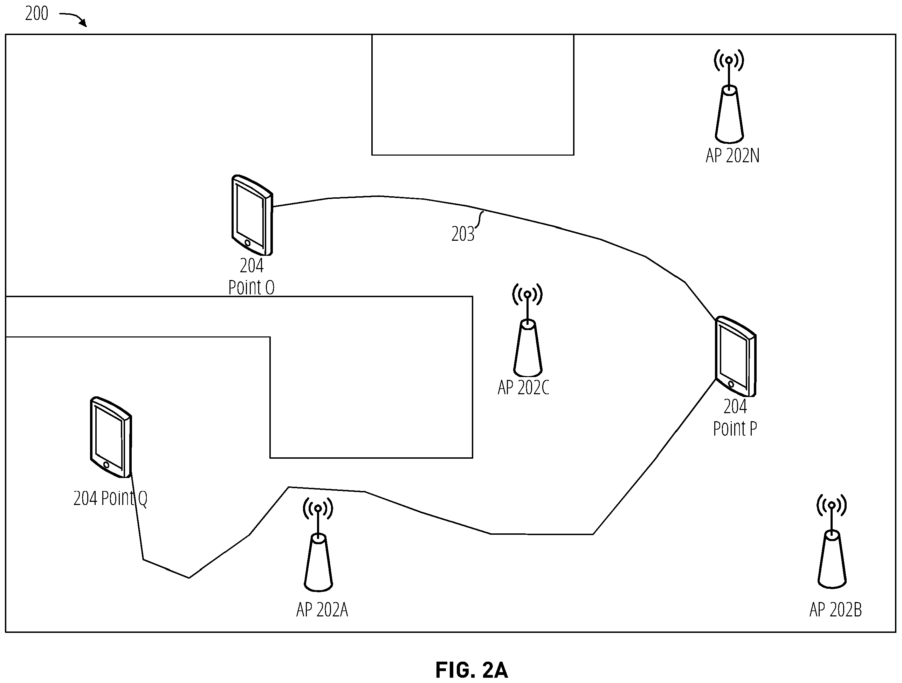

FIG. 2A illustrates an example of a single floor of building equipped with wireless communication according to some aspects of the present disclosure. While only a single floor 200 is illustrated a description equally applies to multiple floors in a building. Additionally, some of the floors in a building may not be contiguous, such that floors 1, 3, 4, and 8 span a network for a building that has floors 1-10. Thus, in at least one implementation the building can include one or more floors that do not have a network including one or more AP actors. As illustrated, the single floor 200 includes AP actors 202A, 202B, 202C, 202N. Each of the AP actors 202A, 202B, 202C, 202N can have a respective coverage area such that an overall coverage area can span substantially the entire floor. In other examples, the overall coverage area can extend beyond the entire floor. In other examples, the overall coverage area can extend beyond the entire floor. Additionally, the coverage of an AP actor of AP actors 202A, 202B, 202C, 202N may substantially overlap with the coverage of another AP actor of the AP actors 202A, 202B, 202C, 202N.

As illustrated by line 203, STA actor 204 can move from point O to point P to point Q. When a STA actor 204 is moving around on a given floor, one or more of AP actors 202A, 202B, 202C, 202N can be considered to be nearest to STA actor 204. Nearest as used in relation to AP actors 202A, 202B, 202C, 202N and STA actor 204 can include being physically nearest (for example, a Euclidean distance on the floor) and/or pathloss-nearest (for example, having the lowest wireless attenuation (pathloss) between AP actor, among all the AP actors, and STA actor). Additionally, the pathloss-nearest approach can be used to reduce the likelihood of connection between an AP actor on a floor above or below STA actor 204. The location of the AP actor on the floor above or below might be closer in a Euclidean sense, but also not be a desirable AP for the connection of the device or station due to the floor location and/or possible signal interruption. The location of the AP actor on the floor above or below might be closer in a straight line and/or Euclidean sense, but also not be a desirable AP for the connection of the device or station due to the floor location and/or possible signal interruption. Additionally, the coverage of one or more AP actors can at least partially overlap with the coverage of one or more other AP actors. The present disclosure provides for selecting the AP actor and/or providing a communication pathway from one or more STA actors through one or more AP actors.

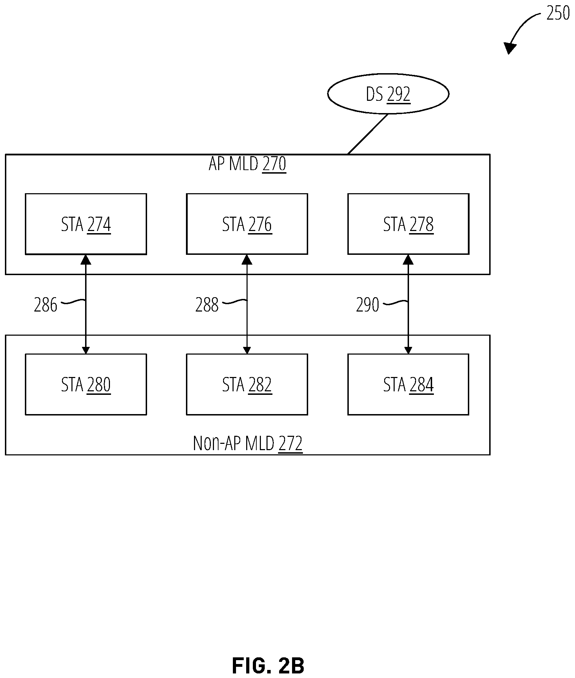

FIG. 2B depicts an illustrative schematic diagram for MI,O between an AP MLD with affiliated logical entities and a non-AP MLD with affiliated logical entities according to some aspects of the present disclosure.

Referring to FIG. 2B, schematic diagram 250 may include two multi-link logical entities AP MLD 270 and Non-AP MLD 272. AP MLD 270 may include physical and/or logical affiliated AP such as AP 274, AP 276, and AP 278 operating in different channels and typically different frequency bands (e.g., 2.4 GHz, 5 GHz, and 6 GHz). AP 274, AP 276, and AP 278 may be the same as or similar to any one of the APs described above. Non-AP MLD 272 may include STA 280, STA 282, and STA 284, which may be the same as or similar to any of the STAs as described herein.

AP 274 may communicate with STA 280 via link 286. AP 276 may communicate with STA 282 via link 288. AP 278 may communicate with STA 284 via link 290.

AP MLD 270 is shown in FIG. 2B to have access to a distribution system (DS) such as DS 292, which is a system used to interconnect a set of BSSs to create an extended service set (ESS).

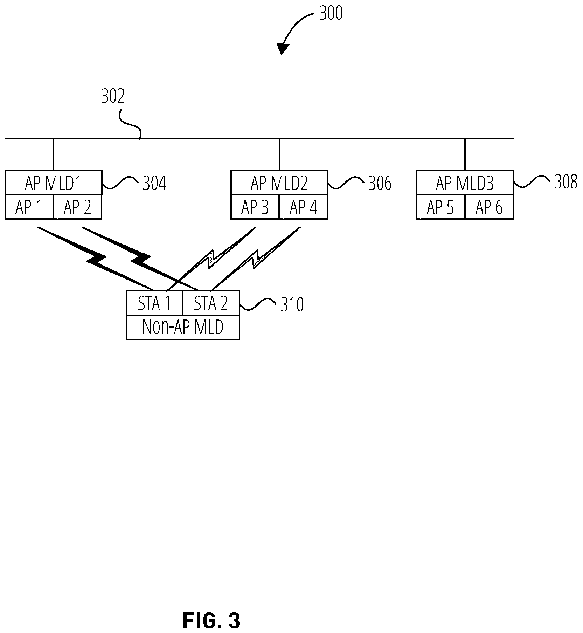

It should be understood that although the example shows three logical entities within the AP MLD and the three logical entities within the non-AP MLD, this is merely for illustration purposes and that other numbers of logical entities within each of the AP MLD and Non-AP MLD may be envisioned. The example Wi-Fi systems and MLO described above with reference to FIGs. 1 and 2A-2B provide examples of simplified and example systems of the present disclosure. Additional details of the present disclosure are provided in relation to FIGS. 3, 4, and 5.

FIG. 3 illustrates an example of a seamless mobility domain according to some aspect of the present disclosure.

FIG. 3 illustrates an example architecture of a Seamless Mobility Domain (SMD) shown as SMD 300 that includes a DS 302 (may be the same as the DS 292) that is a logically connected entity that includes AP MLD1 304, AP MLD2 306, and AP MLD3 308, all of which can form an ESS (e.g., all AP MLDs which are part of a campus ESS network). SMD 300 also shows a non-AP MLD 310 that may be connected to AP MLD1 304.

AP MLD1 304 may include one or more APs such as AP1 and AP2. AP1 and AP2 may be different physical APs (or AP interfaces) co-located in AP MLD1 304. Similarly, AP MLD2 306 may include one or more APs such as AP3 and AP4. AP3 and AP4 may be different physical APs (or AP interfaces) co-located in AP MI,D2 306. Similarly, AP MLD3 308 may include one or more APs such as AP5 and AP6. AP5 and AP6 may be different physical APs (or AP interfaces) co-located in AP MLD3 308. The number of AP MLDs and/or the number of respective APs of each AP MLD is not limited to the example numbers shown in FIG. 2B and may include more or less.

In one example, AP MLD1 304, AP MLD2 306, and AP MLD3 308 may be located in different geographical locations (e.g., different rooms of the same building, different floors of the same building, different buildings of the same campus or area, etc.).

Non-AP MLD 310 may be any known or to be developed device capable of establishing one or more wireless communication links with one or more of AP MLD1 304, AP MLD2 306, and/or AP MLD3 308. As a non-limiting example, non-AP MLD 310 may be a mobile device having two wireless interfaces, each of which may correspond to one of STA 1 or STA 2. In one example, each one of STA 1 and STA 2 may operate on a different link (e.g., 5 GHz for STA 1 and 6 GHz for STA 2). The number of non-AP MLDs and/or STAs associated with each is not limited to that shown in FIG. 3 and may be more or less.

As shown in FIG. 3, the non-AP MLD 310 is associated with the SMD 300 with multiple links setup with the AP MLD1 304 (for example, 2.4 GHz link with the AP1 for the STA 1 and 5 GHz link with the AP2 for the STA 2). For one of the links (for example, 2.4 GHz), the AP MLD 310 may detect a weak RSSI. As a result, the AP MLD 310 determines a specific roaming target AP3 of AP MLD2 306 for that link to Switch to. Similarly, the same process may be performed for the other link (for example, the 5 GHz) to Switch to a link with STA 4 on the AP MLD2 205.

In order to support seamless link level roaming for an ESS/NID/MDM/SMD (e.g., for MBBR), by way of an example, seamless link level roaming may be initiated by the current AP MLD (e.g., AP MLD1 304). Alternatively, seamless link level roaming may be based upon a request received from the non-AP MLD (e.g., non-AP MLD 310). The current AP MLD (may also be referred to as the Source AP MLD) may send a frame, for example, a BSS Transition Management Request frame or any other known or to be developed management frame, to indicate to the Non-AP MLD one or more of: a) one or more 'delete link' operations for link(s) of the current AP MLD (in the old MLD's link ID space); and/or b) one or more 'add link' operations for link(s) of a new Target AP MLD such as the AP MLD2 306 (in the new MLD's link ID space), wherein the current AP MLD may indicate 'add link' operations for multiple candidate Target AP MLDs.

As described herein, the link space can be defined and identified corresponding to each AP MLD by the respective AP MLD MAC Address field included in the Reconfiguration ML element. Accordingly, the frame, such as the BSS Transition Management Request frame, may include multiple Reconfiguration Multi-Link elements. Each Reconfiguration Multi-Link element of the multiple Reconfiguration Multi-Link elements corresponds with each AP MLD for which either a link add, or a link delete operation is indicated in the frame. Further, as described herein, the link add operation may be indicated for multiple roaming candidate Target AP MLDs within the Link Reconfiguration Notify frame. In the Reconfiguration Multi-Link element, the MLD MAC Address may be set to the MLD MAC Address of the AP MLD for which the link add, or the link delete operation is indicated.

Support for seamless/smooth roaming capability is a consideration for Wi-Fi 8 to improve Wi-Fi roaming quality. To support smooth roaming/mobility in network (e.g., a geographically dispersed network such as on a campus wide Wi-Fi network), clients can create association with the campus-network/ESS instead of with an individual AP MLD. The ESS might be represented by a mobility domain or, in the case that the network is a global network, then there can be multiple "sub-mobility domains" within a mobility domain, each of which can map to a single campus.

A client such as the non-AP MLD 310 currently creates its association with the ESS network such as the SMD 300, instead of associating with a single AP MLD (e.g., AP MLD1 304, AP MLD2 306, and/or AP MLD3 308) within the ESS. Such an architecture will enable a client to roam seamlessly between AP MLDs without requiring (re)association and reestablishment of contexts with each new AP MLD, since the client associates with the SMD covering all the AP MLDs of the ESS. Such an architecture can significantly reduce roaming time to realize seamless roaming. Signaling procedures to enable such seamless roaming are described in the present disclosure.

In order to support seamless link level roaming for an ESS/NID/MDM/SMD (e.g., for MBBR). By way of an example, seamless link level roaming may be initiated by the current AP MLD. Alternatively, seamless link level roaming may be based upon a request received from the non-AP MLD. The current AP MLD (or source AP MLD) sends a frame, for example, a Link Reconfiguration Notify frame or another equivalent management frame, to indicate to the non-AP MLD one or more of: a) one or more 'delete link' operations for link(s) of the current AP MLD (in the old MLD's link ID space); and/or b) one or more 'add link' operations for link(s) of a new target AP MLD (in the new MLD's link ID space), wherein the current AP MLD may indicate 'add link' operations for multiple candidate target AP MLDs.

As described herein, the link space can be defined and identified corresponding to each AP MLD by the respective AP MLD MAC Address field included in the Reconfiguration ML element. Accordingly, the frame, such as the Link Reconfiguration Notify frame, may include multiple Reconfiguration Multi-Link elements. Each Reconfiguration Multi-Link element of the multiple Reconfiguration Multi-Link elements corresponds with each AP MLD for which either a link add, or a link delete operation is indicated in the frame. Further, as described herein, the link add operation may be indicated for multiple roaming candidate target AP MLDs within the Link Reconfiguration Notify frame. In the Reconfiguration Multi-Link element, the MLD MAC Address may be set to the MLD MAC Address of the AP MLD for which the link add, or the link delete operation is indicated.

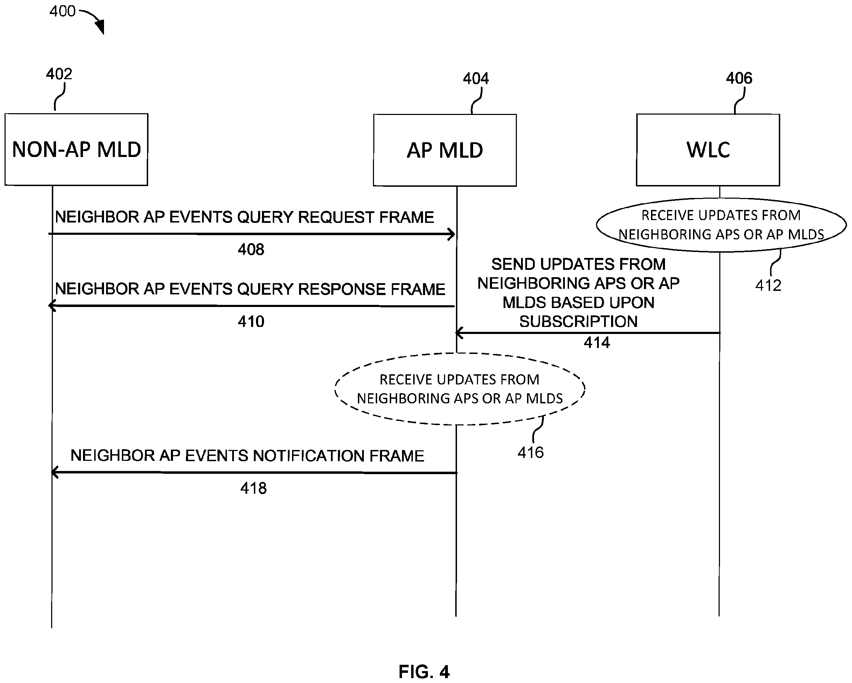

FIG. 4 illustrates an example event trace diagram 400, according to some aspects of the present disclosure, between a non-AP MLD 402, an AP MLD 404, and a WLC 406. The WLC 406 may be a centralized controller (WLC) that is communicatively coupled with one or more neighboring APs (or AP MLDs) that are not shown in FIG. 4. As described herein, the non-AP MLD 402 may send a request frame 408 to the AP MLD 404, which may be a current serving AP or current serving AP MLD for the non-AP MLD 402. The non-AP MLD 402 may be a client device referenced in the present disclosure. By way of an example, the request frame 408 may be a neighbor AP Events Query Request frame 408 that is sent by the non-AP MLD 402 to subscribe for receiving one or more updates about a plurality of APs. The plurality of APs is neighboring APs or neighboring AP MLDs described in the present disclosure.

In response to receiving the request frame 408, the AP MLD 404 may identify one or more type of events associated with at least one of the plurality of APs (or AP MLDs) for which the non-AP MLD 402 has requested an update and may send a response frame 410. The response frame 410 may be a neighbor AP Events Query Response frame 410. As described herein, the response frame 410 may indicate acceptance or rejection of a request from the non-AP MLD 402 for each of the one or more type of events associated with the at least one of the plurality of APs (or AP MLDs). Since the processing of the request frame 408 to generate and send the response frame 410 is described in detail in the present disclosure, those details are not repeated herein for the sake of brevity.

As described herein, the WLC 406 receives 412 regular event updates from one or more neighboring APs (or AP MLDs) whenever an event occurs, or an event update occurs. The event update, as described herein, may be provided based upon satisfying a certain threshold condition; for example, a BSS Load update may be provided when the BSS load changes by +/- 10%. The serving AP 404 to the non-AP MLD 402 subscribes for receiving events updates for desired events with the WLC 406 for receiving updates related to one or more neighboring APs (or AP MLDs), upon receiving the request frame 408 from the client device or non-AP MLD 402. The WLC 406 maintains events subscription information describing which serving APs including the AP MLD 404 are interested in receiving which events updates from which neighboring APs or AP MLDs. The WLC 406 then forwards or sends 414 applicable events updates to the serving AP MLD 404 when it receives those events updates from the neighboring APs or neighboring AP MLDs.

Alternatively, as described herein, with reference to the distributed subscription model, the current serving AP 404 (or AP MLD) subscribes for events with one or more neighboring APs (or AP MLDs) directly, upon receiving the request frame 408 from the client device or non-AP MLD 402. Each neighboring AP (or AP MLD) maintains subscription information describing which other APs or AP MLDs are interested in which specific event updates from that AP. The neighboring AP then forwards events updates to subscribed APs when those events updates happen. The AP MLD 404 thus receives events updates from one or more neighboring APs or AP MLDs, as shown in FIG. 4, as 416.

The AP MLD 404 then generates and send a notification frame, such as a Neighbor AP Events Notification frame, as shown in FIG. 4 as 418. As described herein, the notification frame 418 may be generated to include at least one Event Update Notification element and sent to the client device or non-AP MLD 402, as requested by the client device 402 and/or agreed by the client device 402 and the serving AP (or AP MLD) 404. The notification frame is sent 418 by the serving AP (or AP MLD) 404 to the client device 402 to provide events updates notifications from one or more neighboring APs (or AP MLDs) to the client device 402. The notification frame is based upon aggregation of events updates for multiple events in the same frame across multiple neighboring APs (or AP MLDs). By way of an example, the notification frame includes one or more Event Update Notification element, where each Event Update Notification element corresponds with one neighboring AP (or AP MLD). Since further details of the notification frame is described in detail in the present disclosure, those details are not repeated for the sake of brevity.

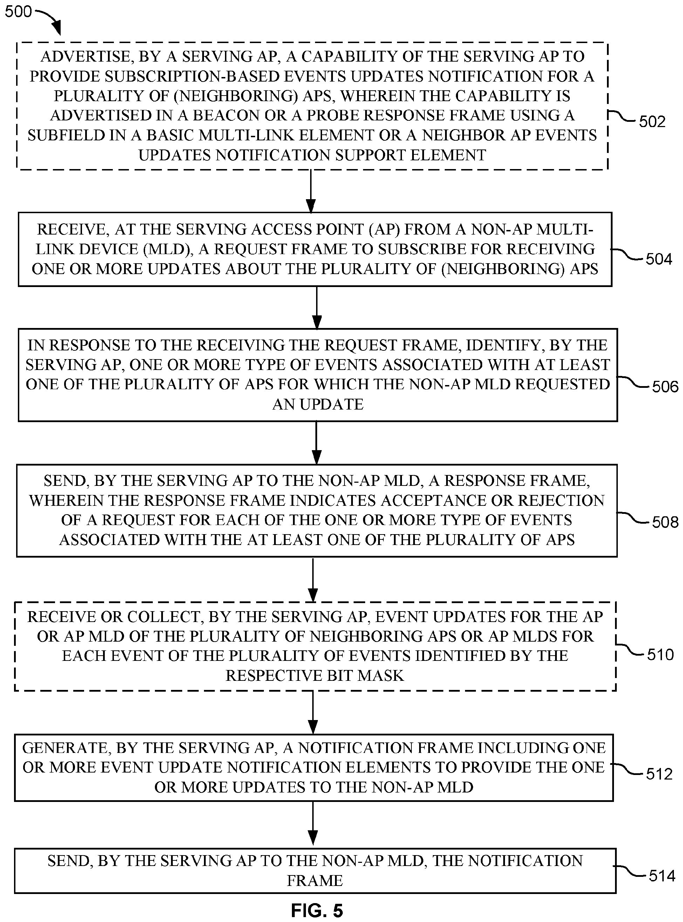

FIG. 5 illustrates an example flow-chart 500 of method operations according to some aspects of the present disclosure. The method operations are performed by, or at, a serving AP (or AP MLD) shown in FIG. 4 as 404. The method operations include advertising 502, by the serving AP 404, a capability of the serving AP 404 to provide subscription-based events updates notification for the plurality of neighboring APs or AP MLDs. The capability is advertised in a beacon or a probe response frame using a subfield in a basic multi-link (ML) element or a neighbor AP events updates notification support element. In some examples, advertising 502 by the serving AP 404 may be an optional step.

The method operations may include receiving 504 by the serving AP 404 from the non-AP MLD, shown in FIG. 4 as 402, a request frame 408. The request frame 408 includes a request to subscribe, or to receive, one or more updates about a plurality of APs. The plurality of APs is neighboring APs or AP MLDs for the non-AP MLD 402. The serving AP 404 identifies an AP of the plurality of APs based on a corresponding basic service set identifier (BSSID) of the AP, a MAC address, or an AP MLD identifier of the AP. In some examples, the serving AP 404 determines that the request frame 408 identifies the plurality of APs as a wildcard and identifies that the non-AP MLD 402 requests one or more types of events for all relevant BSSIDs of the plurality of neighboring APs. As described herein, all relevant BSSIDs are in a single extended service set (ESS), a single wireless local area network (WLAN), or on a single floor. Additionally, or alternatively, the one or more APs of the plurality of APs are determined as being a first hop or a second hop neighbor of the serving AP 404 based on the request frame 408.

in response to the receiving 504 the request frame, the method operations include identifying 506 one or more type of events associated with at least one AP of the plurality of APs for which the non-AP MLD 402 has requested the one or more updates. Identifying 506 the one or more type of events includes identifying a list of events from an event types element corresponding to each respective AP of the plurality of APs. The list of events includes a BSS load update event, an AP add event, an AP delete event, an AP link enable event, an AP link disable event, a basic service set (BSS) parameters change count update event, and/or an AC/TID update event, wherein each event in the list of events is identified by a respective bit mask. The respective bit mask is indicative of an event specific update request or exclusion thereof. A value of 1 for the respective bit mask represents the non-AP MLD requested to subscribe for receiving the update for a particular type of event of the one or more type of events, and a value of 0 for the respective bit mask represents the non-AP MLD requested to not subscribe for receiving the update for the particular type of event.

Additionally, or alternatively, identifying 506 the one or more type of events includes identifying a threshold for a degree of change corresponding to the one or more type of events for sending update about the plurality of APs to the non-AP MLD 402. Further, identifying 506 the one or more type of events includes identifying whether the non-AP MLD 402 is requesting one time update about the one or more type of events, regular event updates about the one or more type of events, or regular event updates about the one or more type of events when a threshold condition is met. As described herein, the threshold condition corresponds with an uplink received signal strength indicator (RSSI) value measured by the serving AP that is below a predetermined value. By way of an example, the predetermined value is less than -60 dBm or -65 dBm.

The method operations may include sending 508, by the serving AP 404 to the non-AP MLD 402, a response frame, as shown in FIG. 4 as 410. The response frame 410 indicates acceptance or rejection of a request for each of the one or more type of events associated with the at least one of the plurality of APs.

The request frame 408 or the response frame 410 is received or sent, respectively, as a protected management frame. Alternatively, the request frame 408 and the response frame 410 are received and sent, respectively, as a neighbor report request frame and a neighbor report response frame, or the request frame 408 and the response frame 410 are received and sent, respectively, as a neighbor AP events query request frame and neighbor AP events query response frame.

The method operations may include receiving or collecting 510, by the serving AP 404, event updates for the AP or AP MLD of the plurality of neighboring APs or AP MLDs for each event of the plurality of events identified by the respective bit mask, as described herein. As shown in FIG. 4, the event updates are received or collected by the serving AP 404 from the WLC 406 to which the plurality of APs provide the event updates. The WLC 406 maintains events subscription information to provide the event updates to the serving AP 404 when the serving AP 404 receives the event updates, from the plurality of APs.

Alternatively, as shown in FIG. 4, the event updates are received or collected by the serving AP 404 from each of the plurality of APs by subscribing for the event updates from the plurality of APs. Each AP of the plurality of APs maintains events subscription information to provide the event updates to the serving AP 404. As described herein, the event updates are received or collected by the serving AP 404 over-the-air using multi-AP coordination messaging.

The method operations may further include generating 512, by the serving AP 404, a notification frame that is shown in FIG. 4 as 418, and sending 514, by the serving AP 404 to the non-AP MLD 402, the notification frame 418. The notification frame 418 may include one or more event update notification elements. Each of the one or more event update notification elements corresponds to an AP or AP MLD of the plurality of APs (or neighboring APs or neighboring AP MLDs). Sending 514 the notification frame may include sending a neighbor AP events notification frame upon determining that a signal strength indicator (RSSI) of non-AP MLD meets a particular criterion. By way of an example, the particular criterion may be that the RSSI is not greater than a negotiated RSSI threshold value. In some examples, sending 514 the notification frame may include broadcasting the notification frame. In some examples, the notification frame may be sent as a protected management frame.

An event update notification element of the one or more event update notification elements includes a basic service set identifier (BSSID) of a respective AP or AP MLD of the plurality of APs. Alternatively, an event update notification element of the one or more event update notification elements includes an identifier of a respective AP or AP MLD of the plurality of APs. The identifier is a media access control (MAC) address of the respective AP or AP MLD.

As described herein, an event update notification element of the one or more event update notification elements includes a plurality of events corresponding to the AP or AP MLD of the plurality of APs. Each event of the plurality of events is identified by a respective bit mask. The plurality of events includes a BSS load update event, an AP add event, an AP delete event, an AP link enable event, an AP link disable event, a basic service set (BSS) parameters change count update event, and/or an AC/TID update event, wherein each event of the plurality of events is identified by a respective bit mask.

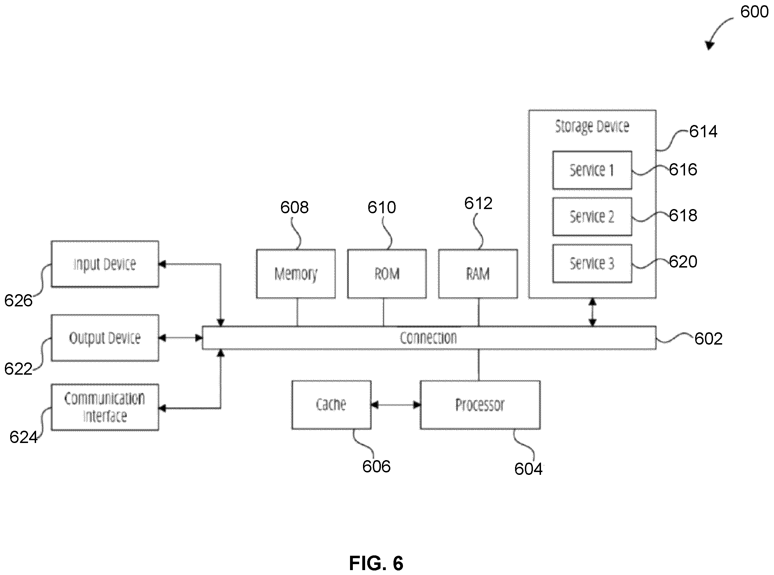

FIG. 6 illustrates an example of a computing system 600 in accordance with certain embodiments. The computing system 600, which can be for example any computing device making up a system network, or any component thereof in which the components of the system are in communication with each other using connection 602. Connection 602 can be a physical connection via a bus, or a direct connection into processor 604, such as in a chipset architecture. Connection 602 can also be a virtual connection, networked connection, or logical connection.

In some embodiments, computing system 600 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 600 includes at least one processing unit (central processing unit (CPU) or processor) and connection 602 that couples various system components including system memory 608, such as read-only memory (ROM) 610 and random-access memory (RAM) 612 to processor 604. Computing system 600 can include a cache of high-speed memory 608 connected directly with, in close proximity to, or integrated as part of processor 604.

Processor 604 can include any general-purpose processor and a hardware service or software service, such as services 616, 618, and 620 stored in storage device 614, configured to control processor 604 as well as a special-purpose processor where software instructions are incorporated into the actual processor design. Processor 604 may essentially be a completely self-contained computing system, containing multiple cores or processors, a bus, memory controller, cache, etc. A multi-core processor may be symmetric or asymmetric.

To enable user interaction, computing system 600 includes an input device 626, which can represent any number of input mechanisms, such as a microphone for speech, a touch-sensitive screen for gesture or graphical input, keyboard, mouse, motion input, speech, etc. Computing system 600 can also include output device 622, which can be one or more of a number of output mechanisms known to those of skill in the art. In some instances, multimodal systems can enable a user to provide multiple types of input/output to communicate with computing system 600. Computing system 600 can include communication interface 624, which can generally govern and manage the user input and system output. There is no restriction on operating on any particular hardware arrangement, and therefore the basic features here may easily be substituted for improved hardware or firmware arrangements as they are developed.

Storage device 614 can be a non-volatile memory device and can be a hard disk or other types of computer-readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 614 can include software services, servers, services, etc., that when the code that defines such software is executed by the processor 604, it causes the system to perform a function. In some embodiments, a hardware service that performs a particular function can include the software component stored in a computer-readable medium in connection with the hardware components, such as processor 604, connection 602, output device 622, etc., to carry out the function.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general-purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware, and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

## Claims

1. A computer-implemented method comprising:

   receiving, at a serving access point (AP) from a non-AP multi-link device (MLD), a request frame that includes a request for receiving one or more updates about a plurality of APs;
   in response to the receiving the request frame, identifying, by the serving AP, one or more type of events associated with at least one AP of the plurality of APs for which the non-AP MLD requested the one or more updates; and
   sending, by the serving AP to the non-AP MLD, a response frame that indicates one of acceptance or rejection of the request for receiving the one or more updates.

2. The computer-implemented method of claim 1, wherein identifying the one or more type of events associated with the at least one AP of the plurality of APs further includes determining the at least one AP of the plurality of APs using at least one of, a basic service set identifier (BSSID), a media access control (MAC) address, or an AP MLD identifier, of the at least one AP of the plurality of APs, wherein the at least one AP of the plurality of APs is an AP MLD, and wherein the AP MLD is a neighboring AP MLD.

**3.** The computer-implemented method of any preceding claim, further comprising:

> determining, by the serving AP, that the request frame identifies the plurality of APs as a wildcard; and
> identifying, by the serving AP, that the non-AP MLD requests the one or more type of events for all relevant basic service set identifiers (BSSIDs) of the plurality of APs, optionally wherein all the relevant BSSIDs are in a single extended service set (ESS), a single wireless local area network (WLAN), or on a single floor.

**4.** The computer-implemented method of any preceding claim, wherein the at least one AP of the plurality of APs is determined as being a first hop or a second hop neighbor of the serving AP based on the request frame.

**5.** The computer-implemented method of any preceding claim, wherein identifying the one or more type of events comprises identifying a list of events from an event types element corresponding to the at least one AP of the plurality of APs., optionally wherein the list of events includes a BSS load update event, an AP add event, an AP delete event, an AP link enable event, an AP link disable event, a basic service set (BSS) parameters change count update event, and/or an access category and traffic identifier (AC/TID) update event, wherein each event in the list of events is identified by a respective bit mask that is indicative of an event specific update request or exclusion thereof.

**6.** The computer-implemented method of any preceding claim, wherein identifying the one or more type of events further comprises identifying a threshold for a degree of change corresponding to the one or more type of events for sending update about the at least one AP of the plurality of APs to the non-AP MLD.

**7.** The computer-implemented method of any preceding claim, wherein identifying the one or more type of events comprises identifying whether the non-AP MLD is requesting one time update about the one or more type of events, regular event updates about the one or more type of events, or regular event updates about the one or more type of events when a threshold condition is met.

**8.** The computer-implemented method of any preceding claim, wherein:

> the request frame is a neighbor report request frame and the response frame is a neighbor report response frame; or
> the request frame is a neighbor AP events query request frame and the response frame is a neighbor AP events query response frame.

**9.** The computer-implemented method of any preceding claim, further comprising advertising, by the serving AP, a capability of the serving AP to provide subscription-based events updates notification for a plurality of neighboring APs or AP MLDs, wherein the capability is advertised in a beacon or a probe response frame using a subfield in a basic multi-link element or a neighbor AP events updates notification support element.

**10.** The computer-implemented method of any preceding claim, further comprising:

> generating, by the serving AP, a notification frame; and
> sending, by the serving AP to the non-AP MLD, the notification frame, wherein the notification frame includes one or more event update notification elements, each of the one or more event update notification elements corresponds to an AP or AP MLD of the plurality of APs.

**11.** The computer-implemented method of claim 10, wherein any one or more of:

> A) an event update notification element of the one or more event update notification elements comprises a basic service set identifier (BSSID) or a media access control (MAC) address of a respective AP or AP MLD of the plurality of APs;
> B) one or more event updates are received or collected, by the serving AP, over a distribution system (DS) or over-the-air using multi-AP coordination messaging;
> C) the method further comprises broadcasting, by the serving AP, the notification frame.

**12.** The computer-implemented method of claim 10 or 11, wherein one or more event updates are collected by the serving AP using one of a centralized subscription model from a centralized controller or a distributed subscription model from each of the plurality of APs.

**13.** The computer-implemented method of claim 12, wherein any one or more of:

A) the centralized controller maintains a database of event updates for the plurality of APs in order to provide the one or more event updates to the non-AP MLD according to the centralized subscription model;

B) under the distributed subscription model, the serving AP separately receives respective event updates from one or more of the plurality of APs, in order to provide the one or more event updates to the non-AP MLD.

**14.** An access point (AP) comprising:

at least one memory configured to store machine-executable instructions; and
at least one processor communicatively coupled with the at least one memory and configured to execute the machine-executable instructions to:

receive, from a non-AP multi-link device (MLD), a request frame that includes a request for receiving one or more updates about a plurality of APs;
in response to the receiving the request frame, identify one or more type of events associated with at least one AP of the plurality of APs for which the non-AP MLD requested one or more updates; and
send, to the non-AP MLD, a response frame that indicates one of acceptance or rejection of the request for receiving the one or more updates.

**15.** A non-transitory computer-readable media comprising computer-readable instructions stored thereon, which, when executed by at least one processor of an access point (AP), cause the AP to:

receive, from a non-AP multi-link device (MLD), a request frame that includes a request for receiving one or more updates about a plurality of APs;
in response to the receiving the request frame, identify one or more type of events associated with at least one AP of the plurality of APs for which the non-AP MLD requested one or more updates; and
send, to the non-AP MLD, a response frame that indicates one of acceptance or rejection of the request for receiving the one or more updates.

**FIG. 1**

EP 4 586 693 A1

**FIG. 2A**

EP 4 586 693 A1

250

DS 292

AP MLD 270

| STA 274 | STA 276 | STA 278 |

286          288          290

| STA 280 | STA 282 | STA 284 |

Non-AP MLD 272

**FIG. 2B**

**FIG. 3**

EP 4 586 693 A1

FIG. 4

EP 4 586 693 A1

500

ADVERTISE, BY A SERVING AP, A CAPABILITY OF THE SERVING AP TO PROVIDE SUBSCRIPTION-BASED EVENTS UPDATES NOTIFICATION FOR A PLURALITY OF (NEIGHBORING) APS, WHEREIN THE CAPABILITY IS ADVERTISED IN A BEACON OR A PROBE RESPONSE FRAME USING A SUBFIELD IN A BASIC MULTI-LINK ELEMENT OR A NEIGHBOR AP EVENTS UPDATES NOTIFICATION SUPPORT ELEMENT — 502

RECEIVE, AT THE SERVING ACCESS POINT (AP) FROM A NON-AP MULTI-LINK DEVICE (MLD), A REQUEST FRAME TO SUBSCRIBE FOR RECEIVING ONE OR MORE UPDATES ABOUT THE PLURALITY OF (NEIGHBORING) APS — 504

IN RESPONSE TO THE RECEIVING THE REQUEST FRAME, IDENTIFY, BY THE SERVING AP, ONE OR MORE TYPE OF EVENTS ASSOCIATED WITH AT LEAST ONE OF THE PLURALITY OF APS FOR WHICH THE NON-AP MLD REQUESTED AN UPDATE — 506

SEND, BY THE SERVING AP TO THE NON-AP MLD, A RESPONSE FRAME, WHEREIN THE RESPONSE FRAME INDICATES ACCEPTANCE OR REJECTION OF A REQUEST FOR EACH OF THE ONE OR MORE TYPE OF EVENTS ASSOCIATED WITH THE AT LEAST ONE OF THE PLURALITY OF APS — 508

RECEIVE OR COLLECT, BY THE SERVING AP, EVENT UPDATES FOR THE AP OR AP MLD OF THE PLURALITY OF NEIGHBORING APS OR AP MLDS FOR EACH EVENT OF THE PLURALITY OF EVENTS IDENTIFIED BY THE RESPECTIVE BIT MASK — 510

GENERATE, BY THE SERVING AP, A NOTIFICATION FRAME INCLUDING ONE OR MORE EVENT UPDATE NOTIFICATION ELEMENTS TO PROVIDE THE ONE OR MORE UPDATES TO THE NON-AP MLD — 512

SEND, BY THE SERVING AP TO THE NON-AP MLD, THE NOTIFICATION FRAME — 514

**FIG. 5**

FIG. 6

EP 4 586 693 A1

Europäisches
Patentamt

European
Patent Office

Office européen
des brevets

# EUROPEAN SEARCH REPORT

**Application Number**

EP 25 15 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/413165 A1 (KIM NAMYEONG [KR] ET AL) 21 December 2023 (2023-12-21) * paragraph [0290] - paragraph [0340]; figures 19-21 * * paragraph [0608] - paragraph [0610] * ----- | 1-11,14, 15 | INV. H04W48/14 H04W76/15 H04W84/12 |
| X | US 2021/321410 A1 (PATIL ABHISHEK PRAMOD [US] ET AL) 14 October 2021 (2021-10-14) * paragraph [0139] - paragraph [0156]; figures 9-10H * ----- | 1,14,15 | |
| X | US 2021/321243 A1 (PATIL ABHISHEK PRAMOD [US] ET AL) 14 October 2021 (2021-10-14) * paragraph [0260] - paragraph [0265]; figure 17A * ----- | 1,14,15 | |
| A | AU 2021 323 868 A1 (HUAWEI TECH CO LTD [CN]) 30 March 2023 (2023-03-30) * paragraph [0260] - paragraph [0290]; figure 17A * ----- | 1-15 | |

**TECHNICAL FIELDS SEARCHED (IPC)**

H04W

The present search report has been drawn up for all claims

| Place of search | Date of completion of the search | Examiner |
|---|---|---|
| Munich | 28 May 2025 | Richel, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 586 693 A1

## ANNEX TO THE EUROPEAN SEARCH REPORT
## ON EUROPEAN PATENT APPLICATION NO.

EP 25 15 1669

28-05-2025

| Patent document cited in search report | Publication date | Patent family member(s) | | Publication date |
|---|---|---|---|---|
| US 2023413165 A1 | 21-12-2023 | KR | 20230101802 A | 06-07-2023 |
| | | US | 2023413165 A1 | 21-12-2023 |
| | | WO | 2022103114 A1 | 19-05-2022 |
| US 2021321410 A1 | 14-10-2021 | BR | 112022019428 A2 | 06-12-2022 |
| | | CN | 115380610 A | 22-11-2022 |
| | | CN | 119545554 A | 28-02-2025 |
| | | EP | 4133872 A1 | 15-02-2023 |
| | | KR | 20220165729 A | 15-12-2022 |
| | | TW | 202147908 A | 16-12-2021 |
| | | US | 2021321410 A1 | 14-10-2021 |
| | | US | 2023224939 A1 | 13-07-2023 |
| | | WO | 2021207474 A1 | 14-10-2021 |
| US 2021321243 A1 | 14-10-2021 | BR | 112022019523 A2 | 16-11-2022 |
| | | CN | 115553038 A | 30-12-2022 |
| | | EP | 4133873 A1 | 15-02-2023 |
| | | KR | 20220165736 A | 15-12-2022 |
| | | PH | 12022552018 A1 | 05-02-2024 |
| | | TW | 202143786 A | 16-11-2021 |
| | | US | 2021321243 A1 | 14-10-2021 |
| | | US | 2023403545 A1 | 14-12-2023 |
| | | US | 2025088836 A1 | 13-03-2025 |
| | | WO | 2021207463 A1 | 14-10-2021 |
| AU 2021323868 A1 | 30-03-2023 | AU | 2021323868 A1 | 30-03-2023 |
| | | BR | 112023002567 A2 | 14-03-2023 |
| | | CA | 3192014 A1 | 17-02-2022 |
| | | CA | 3192017 A1 | 17-02-2022 |
| | | CN | 114079941 A | 22-02-2022 |
| | | CN | 116017508 A | 25-04-2023 |
| | | CN | 116233886 A | 06-06-2023 |
| | | EP | 4192078 A1 | 07-06-2023 |
| | | EP | 4192079 A1 | 07-06-2023 |
| | | EP | 4199570 A1 | 21-06-2023 |
| | | JP | 7506252 B2 | 25-06-2024 |
| | | JP | 7559221 B2 | 01-10-2024 |
| | | JP | 7660661 B2 | 11-04-2025 |
| | | JP | 2023537149 A | 30-08-2023 |
| | | JP | 2023537157 A | 30-08-2023 |
| | | JP | 2023537777 A | 05-09-2023 |
| | | JP | 2025003444 A | 09-01-2025 |
| | | KR | 20230048389 A | 11-04-2023 |
| | | KR | 20230049725 A | 13-04-2023 |
| | | KR | 20230050438 A | 14-04-2023 |
| | | US | 2023156492 A1 | 18-05-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 1669

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | Publication date | Patent family member(s) | | Publication date |
|---|---|---|---|---|
| | | US | 2023199527 A1 | 22-06-2023 |
| | | US | 2023199884 A1 | 22-06-2023 |
| | | WO | 2022033592 A1 | 17-02-2022 |
| | | WO | 2022033593 A1 | 17-02-2022 |
| | | WO | 2022033594 A1 | 17-02-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63620874

- US 63620878

**Non-patent literature cited in the description**

- *LAN/MAN Standards Committee of the IEEE Computer Society, Amendment 8: Enhancements for extremely high throughput (EHT)*, September 2020